# EUROPEAN PATENT SPECIFICATION

(11) **EP 4 644 790 B1**
(45) Date of publication and mention of the grant of the patent: **27.05.2026**
(21) Application number: 24202878.5
(22) Date of filing: 26.09.2024
(51) Int. Cl.: F24F 1/10, F24F 1/22

(54) **OUTDOOR UNIT OF AIR CONDITIONER**
AUSSENEINHEIT EINER KLIMAANLAGE
UNITÉ EXTÉRIEURE DE CLIMATISEUR

(30) Priority: 30.04.2024 KR 20240057950
(43) Date of publication of application: 05.11.2025
(73) Proprietor: LG Electronics Inc., Yeongdeungpo-gu Seoul 07336 (KR)
(72) Inventor: Ahn, Min, 08592 Seoul (KR)
(74) Representative: Ter Meer Steinmeister & Partner

(56) References cited:
- WO-A1-2020/234990
- CN-A- 105 156 302
- JP-B2- 4 832 398

## Description

This application claims the benefits of priority to Korean Patent Application No. 10-2024-0057950, filed in Korea on April 30, 2024.

### BACKGROUND

### Field

An outdoor unit of an air conditioner is disclosed herein.

### Background

An air conditioner is an apparatus that heats or cools an indoor space using a refrigerant, and includes a refrigerant circulation system comprising a compressor, a condenser, an expansion valve, and an evaporator. High-temperature and high-pressure refrigerant discharged from the compressor and a fluid, such as water, circulating along an indoor hot fluid pipe exchange heat in a heat exchange device defined as a heat storage tank, to supply hot fluid, such as water, to the indoor space. Such a heat storage type air conditioner may be defined as an Air to Water Heat Pump (AWHP).

The AWHP is a device in which the refrigerant absorbs heat from the air through the evaporator, is converted into the high-temperature and high-pressure refrigerant while passing through the compressor, and then releases the heat back into the fluid flowing into the heat storage tank. In other words, the heat storage type air conditioner may be understood as a device that receives heat from air and supplies the supplied heat and the energy (compression work) supplied from the compressor to the fluid in the form of thermal energy.

The AWHP may be divided into an indoor unit and an outdoor unit. The indoor unit may accommodate a fan and a heat exchanger. The outdoor unit may accommodate a fan, a heat exchanger, a compressor, and a heat storage tank.

A temperature sensor that measures a temperature at an outlet side of the compressor and a hanging device to which a hoist is hooked for transporting the compressor after manufacturing the compressor are combined on a surface or an upper surface of the compressor installed in the outdoor unit of the air conditioner. In the conventional compressor, a holder structure for mounting the temperature sensor and the hanging device for hoisting were provided separately. In addition, a sensing surface of the temperature sensor was spaced apart from the surface of the compressor, thus there was difficulty in accurately detecting the outlet temperature of the compressor.

CN 105 156 302 A presents a temperature sensing bulb fixing device, a compressor and an air conditioner, wherein the temperature sensing bulb fixing device comprises a basal plate and a temperature sensing bulb fixing part, wherein the basal plate is provided with an assembly hole; a connecting part is arranged on the basal plate; the temperature sensing bulb fixing part is connected with the basal plate; and the temperature sensing bulb fixing part is provided with a mounting concave part.

JP 4 832398 B2 presents a compressor provided with a shell, a glass terminal provided on the shell, a metal terminal plate including a first erect part and a second erect part provided so as to erect in a substantially vertical direction on the shell, a resin terminal cover, a clip engaged with the first and the second elect parts and fixing the terminal cover to the shell, a compressor temperature sensor detecting a temperature of the shell, a sensor holding part holding the compressor temperature sensor in close contact with the shell, and a metal thermo holder including an engagement part engaged with the second erect part of the terminal plate.

### SUMMARY

The invention is defined by the subject-matter of the independent claim. The dependent claims define preferred embodiments of the invention.

According to a first aspect of the present invention an outdoor unit of an air conditioner is provided, the outdoor unit comprising: a compressor having a surface or an upper surface and a discharge port protruding from the surface or the upper surface of the compressor; and a fixing bracket coupled on the surface or the upper surface of the compressor, wherein the fixing bracket is formed in one-part form and comprises: a fixing portion fixed to the surface of the compressor by welding or brazing, a hanging portion extending from the fixing portion and inclined upward with respect to the surface of the compressor, wherein hanging portion includes a hanging hole spaced apart from the surface or the upper surface of the compressor and configured to receive a hoist to be hooked thereto, and a sensor holder extending from the fixing portion and defining a sensor space facing the surface or the upper surface of the compressor for receiving a temperature sensor therein to detect a temperature of the surface or the upper surface of the compressor.

The upper surface of the compressor may be used as an example of a surface the compressor. In the present application, descriptions and depictions provided for the upper surface of the compressor are equally applicable to another surface of the compressor which may not be the upper surface of the compressor in a position of the compressor in which the compressor is installed in the outdoor unit for use.

The term 'upward' used in the present application means with respect to the corresponding surface, e.g. a portion inclined 'upward' with respect to a surface of the compressor means the portion extends in an inclined manner from said surface of the compressor towards a direction extending perpendicularly from the surface of the compressor.

According to a second aspect of the present invention, the compressor may comprise a power terminal formed on or protruding from the surface of the compressor, and wherein the sensor holder is spaced apart from the power terminal. Preferably, the discharge port is disposed between the power terminal and the fixing bracket, along the surface of the compressor.

The fixing bracket may comprise a metal bracket having a predetermined width and length, and wherein the fixing bracket may be bent and rounded multiple times.

The fixing bracket includes a fixing portion fixed to the surface of the compressor; a hanging portion inclined upward with respect to the surface of the compressor by a predetermined angle at one end of the fixing portion; and the sensor holder which comprises a portion of the fixing portion which may be convexly rounded in an arch shape.

The sensor holder may comprise a sensor hole or sensor indentation or sensor recessed space configured to receive the temperature sensor inserted therein formed at a lower side of the sensor holder.

The hanging hole is formed in the hanging portion.

According to a third aspect of the present invention, the fixing bracket may comprise at least one linear portion configured to be coupled to the upper surface of the compressor, an inclined portion inclined upward with respect to the upper surface of the compressor by a predetermined angle and provided with a hanging hole configured to receive a hoist hooked thereto, and a rounded portion configured to receive a temperature sensor mounted thereto.

The fixing bracket may comprise a metal bracket having a predetermined width and length.

The at least one linear portion may comprise first and second linear portions, and wherein the rounded portion is formed between the first and second linear portions.

The rounded portion may be convexly rounded in an arch shape.

The rounded portion may form a sensor hole or sensor indentation or sensor recessed space configured to receive the temperature sensor inserted therein.

The inclined portion may be spaced apart from the rounded portion by the at least one linear portion.

The rounded portion and the upper surface of the compressor may form a cavity configured to receive the temperature sensor mounted therein.

According to a fourth aspect of the present invention an air conditioner is provided. The air conditioner comprises an outdoor unit of any one of the preceding aspects.

Any of the preceding aspects may include one or more of the following.

The outdoor unit may include the temperature sensor, wherein a sensing portion of the temperature sensor is in contact with the upper surface of the compressor.

The discharge port may protrude from a center of the upper surface of the compressor; and/or the sensor holder may be spaced apart from the discharge port.

The compressor may further comprise a power terminal formed on or protruding from the upper surface of the compressor.

The sensor holder may be spaced apart from the power terminal.

The discharge port may be disposed between the power terminal and the fixing bracket, along the upper surface of the compressor.

The sensor holder may have a convex shape or arch shape.

A surface of the sensor holder defining the convex shape or the arch shape may face the upper surface of the compressor.

According to the invention, the fixing bracket includes: a fixing portion coupled to the surface of the compressor.

The fixing bracket includes: a hanging portion extending from the fixing portion and inclined upward with respect to the surface of the compressor, wherein hanging portion includes the hanging hole.

The sensor holder extends from the fixing portion.

The fixing portion may have a flat plate shape.

The hanging portion may have a flat plate shape.

The fixing portion may be between the hanging portion and the sensor holder.

The hanging portion, the fixing portion and the sensor holder may be linearly arranged.

The fixing portion may be between the hanging portion and the sensor holder.

According to the invention, the fixing bracket is formed in one-part form.

Portions or parts or regions of fixing bracket defining the hanging portion, the fixing portion and the sensor holder may be linearly arranged.

The fixing bracket may be formed of a single metal bracket bent to define the hanging portion, the fixing portion and the sensor holder.

Portions of the fixing bracket defining the hanging portion, the fixing portion and the sensor holder may be linearly arranged.

The fixing portion may be fixed to the upper surface of the compressor by one or more fastening members penetrating through the fixing portion and coupled to the upper surface of the compressor.

According to the invention, the fixing portion is fixed to the surface of the compressor by welding or brazing.

The fixing bracket may further include: an additional fixing portion coupled to the upper surface of the compressor.

The sensor holder may be disposed between the fixing portion and the additional fixing portion.

The additional fixing portion may be coupled to the upper surface of the compressor by one or more fastening members penetrating through the fixing portion and coupled to the upper surface of the compressor.

The additional fixing portion may be fixed to the upper surface of the compressor by welding or brazing.

The additional fixing portion may have a flat plate shape.

The hanging portion, the fixing portion, the sensor holder and the additional fixing portion may be linearly arranged, and the fixing portion may be between the hanging portion and the sensor holder.

The fixing bracket is formed in one-part form.

Portions of the fixing bracket defining the hanging portion, the fixing portion, the sensor holder and the additional fixing portion may be linearly arranged.

The fixing bracket may be formed of a single metal bracket bent to define the hanging portion, the fixing portion, the sensor holder and the additional fixing portion.

Portions of the fixing bracket defining the hanging portion, the fixing portion, the sensor holder and the additional fixing portion may be linearly arranged.

The fixing bracket may be disposed closer to the center of the upper surface of the compressor than to the edge or circumferential edge of the upper surface of the compressor.

The hanging hole of the fixing bracket may be disposed closer to the center of the upper surface of the compressor than to the edge or circumferential edge of the upper surface of the compressor.

The sensor holder of the fixing bracket may be disposed closer to the center of the upper surface of the compressor than to the edge or circumferential edge of the upper surface of the compressor.

The sensor holder of the fixing bracket may be disposed closer to discharge port of the compressor than to the edge or circumferential edge of the upper surface of the compressor.

The center of the upper surface of the compressor may be same as a vertical axis of the compressor.

One or more of the above mentioned features provides one or more of the following effects - a better balance during hoisting of the compressor due to a more central location of the fixing bracket and/or the hanging hole, a robust yet simple compressor where the same fixing bracket is used for hoisting and for temperature sensor accommodation, more accurate temperature sensing due to direct or secure contact of the sensing portion of the temperature sensor to the upper surface of the compressor and/or due to the proximity of sensing portion of the temperature sensor to the discharge port, reduced interference of temperature sensing from the unwanted effects of the power terminal since the temperature sensor can be placed spaced apart from the power terminal by the discharge port thereinbetween, and/or better space utilization of the upper surface of the compressor.

### BRIEF DESCRIPTION OF THE DRAWINGS

Embodiments will be described in detail with reference to the following drawings in which like reference numerals refer to like elements, and wherein:
FIG. 1 is a schematic diagram of a heat storage type air conditioner according to an embodiment, showing a flow of refrigerant in a cooling mode or a cooling hot fluid mode;
FIG. 2 is a schematic diagram of a heat storage type air conditioner according to an embodiment showing a flow of refrigerant in a heating mode or a heating hot fluid mode;
FIG. 3 is a front perspective view of an outdoor unit of a heat storage type air conditioner according to an embodiment;
FIG. 4 is a rear perspective view of the outdoor unit of FIG. 3;
FIG. 5 is an exploded perspective view of the outdoor unit of FIG. 3;
FIG. 6 is a side perspective view of a heat storage unit provided in the outdoor unit of a heat storage type air conditioner according to an embodiment;
FIG. 7 is a rear perspective view of the heat storage unit of FIG. 6;
FIG. 8 is a perspective view of a compressor equipped with a fixing bracket according to an embodiment;
FIG. 9 is an enlarged view of the compressor showing the fixing bracket mounted thereto; and
FIG. 10 is a cross-sectional view of the fixing bracket, taken along line X-X of FIG. 9.

### DETAILED DESCRIPTION

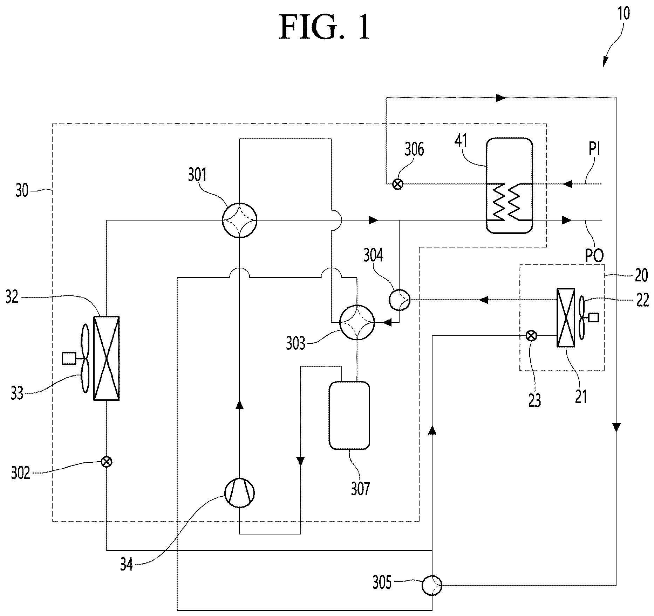

FIG. 1 is a schematic diagram of a heat storage type air conditioner according to an embodiment, showing a flow of refrigerant in a cooling mode or a cooling hot fluid mode. Referring to FIG. 1, a heat storage type air conditioner 10 or an air conditioning system according to an embodiment may include an outdoor unit 30, an indoor unit 20, and a heat storage tank 41.

A compressor 34, a first four-way valve 301 connected to an outlet of the compressor 34, the heat storage tank 41, an accumulator 307 connected to an inlet side of the compressor 34, an outdoor heat exchanger 32, an outdoor fan 33, an outdoor expansion valve 302, a second four-way valve 303, a first three-way valve 304, a second three-way valve 305, and a hot fluid valve 306 connected to an outlet side of the heat storage tank 41 may be accommodated inside of the outdoor unit 30 or may form the outdoor unit 30. Additionally, an indoor heat exchanger 21, an indoor fan 22, and an indoor expansion valve 23 may be accommodated inside of the indoor unit 20 or may form the indoor unit 20.

An inlet pipe PI may be connected to one or a first side of the heat storage tank 41, and an outlet pipe PO may be connected to the other or a second side of the heat storage tank 41. In addition, the components above form a closed circuit by a refrigerant pipe, and depending on an operation mode, an opening degrees of the first four-way valve 301, the second four-way valve 303, the first three-way valve 304, and the second three-way valve 305 may be varied to change a flow of refrigerant. More specifically, the flow of refrigerant in the cooling hot fluid mode will be described hereinafter.

When the cooling hot fluid mode is selected, high-temperature and high-pressure gaseous refrigerant discharged from the compressor 34 flows into the heat storage tank 41 while passing through the first four-way valve 301. The refrigerant passing through the heat storage tank 41 exchanges heat with a fluid, such as water, flowing into the heat storage tank 41 through the inlet pipe PI and then the refrigerant passes through the hot fluid valve 306. The fluid flowing into the heat storage tank 41 through or via or along the inlet pipe PI absorbs heat from the gaseous refrigerant, increases its temperature, and then flows into the indoors through the outlet pipe PO. The hot fluid valve 306 is opened when the cooling hot fluid mode is selected, such that the high-temperature and high-pressure gaseous refrigerant discharged from the compressor 34 may pass through the heat storage tank 41.

The refrigerant discharged from the compressor 34 changes phase into a high-temperature liquid refrigerant while passing through the heat storage tank 41, and after passing through the hot fluid valve 306, a flow direction is changed by the second three-way valve 305 to be guided to the indoor unit 20. The refrigerant flowing into the indoor unit 20 expands into a low-temperature and low-pressure two-phase refrigerant while passing through the indoor expansion valve 23, and then changes into a low-temperature and low-pressure gaseous refrigerant while passing through the indoor heat exchanger 21.

The refrigerant that has passed through the indoor heat exchanger 21 changes its flow direction while passing through the first three-way valve 304 and is guided to the second four-way valve 303. The refrigerant guided to the second four-way valve 303 passes through the accumulator 307 and then returns to the compressor 34.

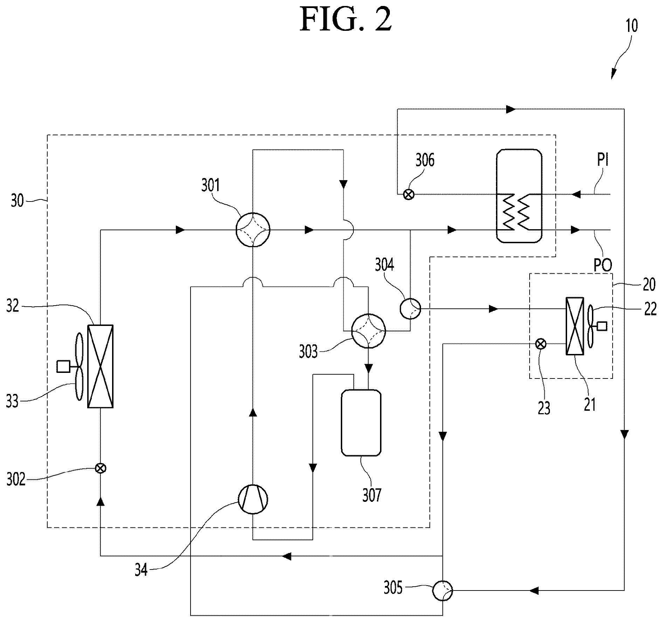

FIG. 2 is a schematic diagram of a heat storage type air conditioner according to an embodiment showing a flow of refrigerant in a heating mode or a heating hot fluid mode.

Referring to Fig. 2, when the heating hot fluid mode is selected, a flow direction of the high-temperature and high-pressure gaseous refrigerant discharged from the compressor 34 is changed by the first four-way valve 301 and is guided to the heat storage tank 41. Some of the refrigerant guided to the heat storage tank 41 is branched into the first three-way valve 304.

The refrigerant guided to the heat storage tank 41 passes through the heat storage tank 41 as the hot fluid valve 306 is opened and exchanges heat with the fluid flowing into the heat storage tank 41 through the intake pipe PI. The refrigerant passing through the heat storage tank 41 changes phase into a high-temperature and high-pressure liquid refrigerant, and the fluid flowing into the inlet pipe PI is heated and supplied indoors through the outlet pipe PO.

The liquid refrigerant passing through the heat storage tank 41 has its flow direction changed by the second three-way valve 305 and is guided to the outdoor expansion valve 302. The refrigerant guided to the outdoor expansion valve 302 passes through the outdoor expansion valve 302 and expands into a low-temperature and low-pressure two-phase refrigerant and then flows into the outdoor heat exchanger 32.

The refrigerant flowing into the outdoor heat exchanger 32 is vaporized into a low-temperature and low-pressure gaseous refrigerant while passing through the outdoor heat exchanger 32, and then the flow direction is changed by the first four-way valve 301 to flow into the second four-way valve 303. In addition, the refrigerant passing through the second four-way valve 33 flows into the accumulator 307, and only the gaseous refrigerant flows into the compressor 34.

A portion of the high-temperature and high-pressure gaseous refrigerant branched at a point between the first four-way valve 301 and the heat storage tank 41 has its flow direction changed by the first three-way valve 304 and flows into the indoor unit 20. The refrigerant flowing into the indoor heat exchanger 21 of the indoor unit 20 is condensed and changes phase into a low-temperature and low-pressure liquid refrigerant, and then passes through the indoor expansion valve 23, to combine with the refrigerant passing through the second three-way valve 305 after passing through the hot fluid valve 306, and finally flows into the outdoor unit 30.

The refrigerant flowing into the outdoor unit 30 expands into a low-temperature and low-pressure two-phase refrigerant while passing through the outdoor expansion valve 302, and evaporates into a low-temperature gaseous refrigerant while passing through the outdoor heat exchanger 32. In addition, the refrigerant passing through the outdoor heat exchanger 32 has its flow direction changed by the first four-way valve 301 and the second four-way valve 303, and flows into the accumulator 307, and only the gaseous refrigerant is reintroduced to the compressor 34.

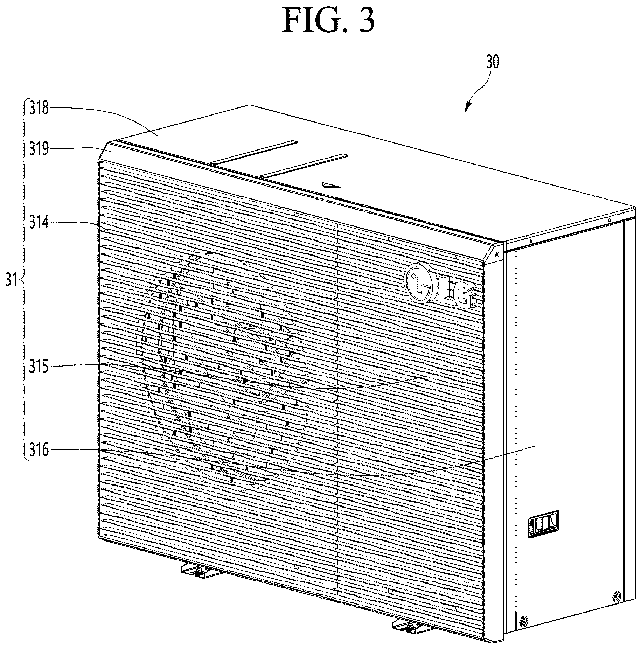

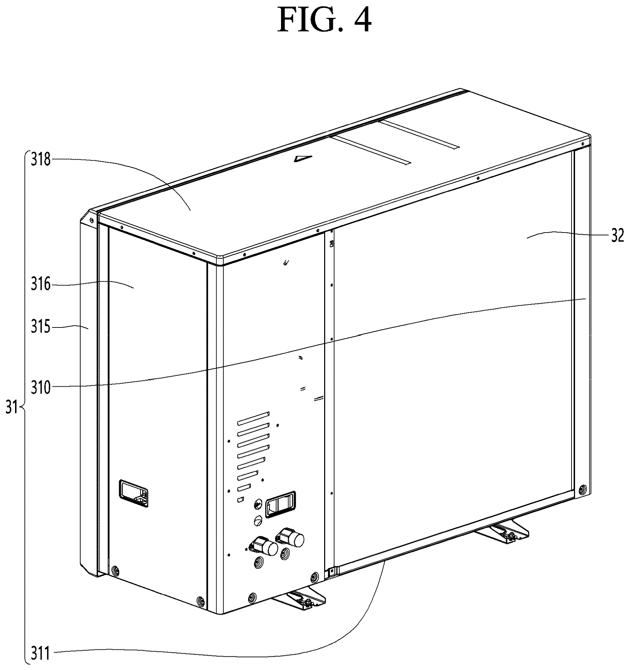

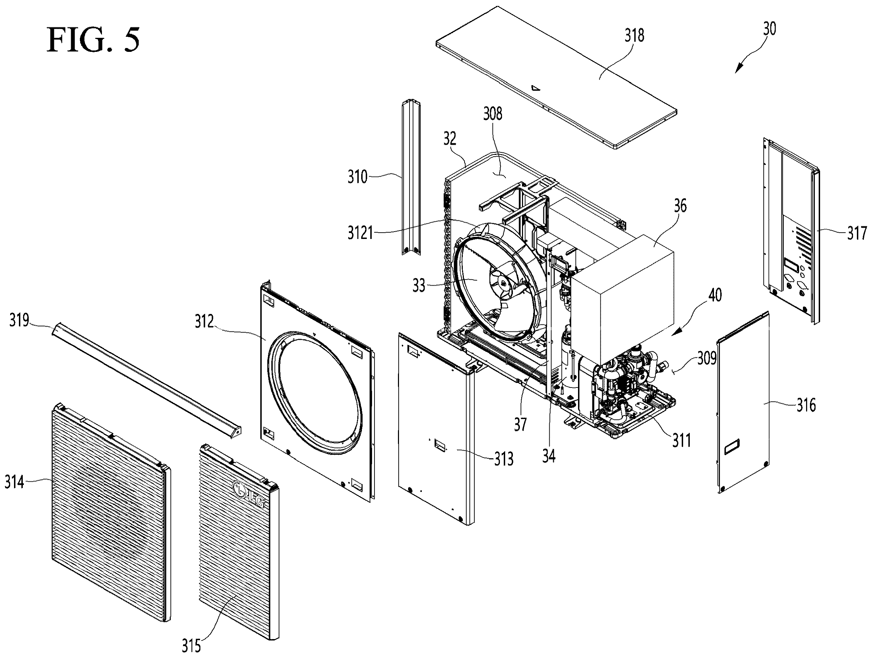

FIG. 3 is a front perspective view of an outdoor unit of an air conditioner or a heat storage type air conditioner according to an embodiment. FIG. 4 is a rear perspective view of the outdoor unit of FIG. 3. FIG. 5 is an exploded perspective view of the outdoor unit of FIG. 3. The outdoor unit may be, but not limited thereto, same as described hereinabove with reference to FIGs 1 and 2.

Referring to FIGS. 3 to 5, the outdoor unit 30 of a heat storage air conditioner according to an embodiment may include a case 31 forming an outer appearance e.g. an outer appearance of the outdoor unit 30, compressor 34 accommodated inside of the case 31, outdoor heat exchanger 32, outdoor fan 33, a control box 36, and a heat storage unit 40.

An internal space of the case 31 may be divided into a heat exchange room 308 and a component room 309 by a partition wall 37. The outdoor heat exchanger 32 and the outdoor fan 33 may be accommodated in the heat exchange room 308, and the component room 309 may include or accommodate or contain components excluding the outdoor heat exchanger 32 and the outdoor fan 33, that is, the compressor 34, the control box 35, and the heat storage unit 40.

The case 31 may include an edge supporter 310, a base plate 311, a front panel, a grille member, a side panel 316, a rear panel 317, a top cover 318, and an upper panel 319. The base plate 311 may form a bottom of the outdoor unit 30 and may have a rectangular parallelepiped shape.

The outdoor heat exchanger 31 may be bent into a L shape to define or correspond to one side end and a portion of a rear end of the base plate 311, more specifically, a side and rear surface of the heat exchange chamber 308.

The front panel may include a first front panel 312 that covers a front of the heat exchange chamber 308 and a second front panel 313 that covers a front of the component room 309. A circular outlet may be formed in the first front panel 312, and a shroud 3121 may be mounted on a backside of the outlet. Air introduced into the heat exchange chamber 308 by the outdoor fan 33 may be discharged to an outside through a discharge port.

The grille member may include a discharge grille 314 that covers a front of the first front panel 312 and a cover grille 315 that covers a front of the second front panel 313. The discharge grille 314 may be formed with the discharge port coaxial with a discharge port of the first front panel 312. The discharge grille 314 and the cover grille 315 may function to shield the first and second front panels 312 and 313 from being exposed to the outside.

The side panel 316 may cover the side of the component room 309. The rear panel 317 may cover a rear of the component room 309.

The top cover 318 may be coupled to an upper end of the grille member 314 and 315, and the upper grille 319 may be in close contact with a front end of the top cover 318. The edge supporter 310 may be disposed at a bent corner of the outdoor heat exchanger 32 to connect a rear edge or rear corner of the base plate 311 and a rear edge or rear corner of the top cover 318.

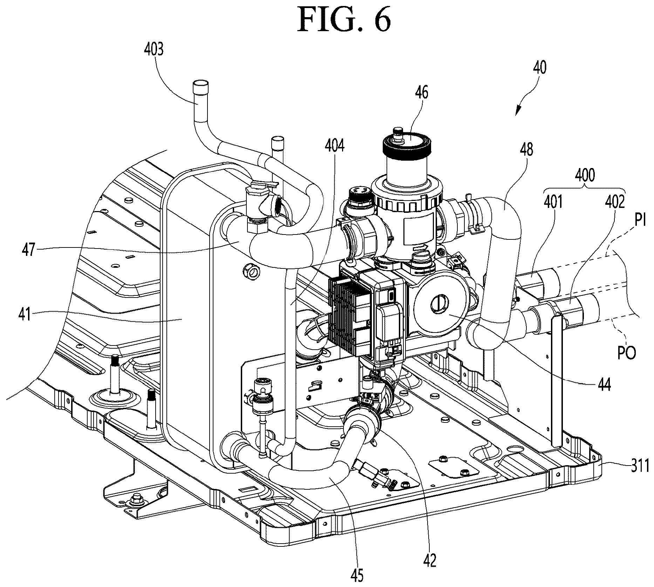

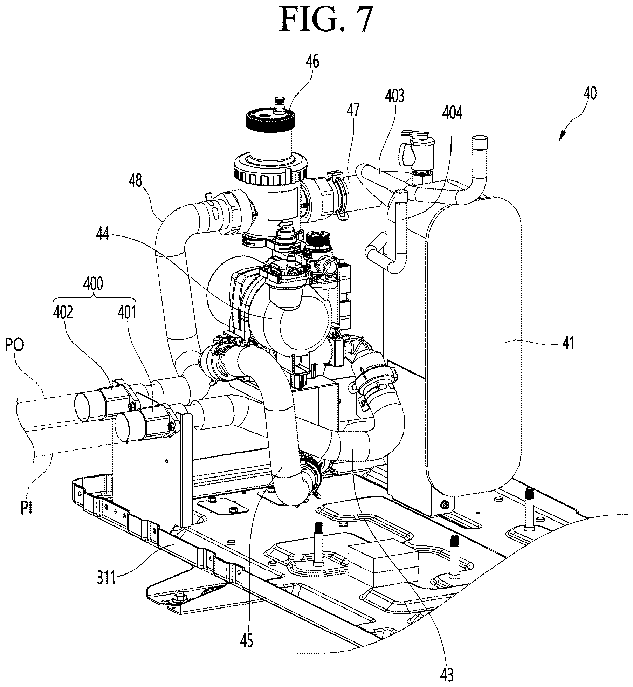

FIG. 6 is a side perspective view of a heat storage unit provided in the outdoor unit of a heat storage type air conditioner according to an embodiment. FIG. 7 is a rear perspective view of the heat storage unit of FIG. 6. The heat storage unit may be, but not limited thereto, same as described hereinabove with reference to FIGs 3 to 5.

Referring to FIGS. 6 and 7, the heat storage unit 40 may be installed inside of the outdoor unit 30 of the heat storage type air conditioner according to an embodiment. The heat storage unit 40 may be disposed in the component room 309 of the outdoor unit 30 and near the compressor 34.

The heat storage unit 40 may include heat storage tank 41. The heat storage tank 41 may be defined as a device in which high-temperature and high-pressure gaseous refrigerant passing through the compressor 34 exchanges heat with a fluid, such as water, for heating or hot fluid supplying (hot water supplying).

A refrigerant inlet pipe 403 may be connected to one or a first side of the heat storage tank 41, and a refrigerant discharge pipe 404 may be connected to the other or a second side. For example, the refrigerant inlet pipe 403 may be connected to an upper side of the heat storage tank 41, and the refrigerant discharge pipe 404 may be connected to a lower side of the heat storage tank 41. It can be understood that the refrigerant inlet pipe 403 is a refrigerant pipe that connects the first four-way valve 301 and the heat storage tank 41, and the refrigerant discharge pipe 404 is a refrigerant pipe that connects the heat storage tank 41 and the hot fluid valve 306.

The heat storage unit 40 may include a pump inlet pipe 43, a pump 44, a pump discharge pipe 45, a deaerator 46, a deaeration inlet pipe 47, a deaeration discharge pipe 48, and a flow sensor 42. A connector 400 may be mounted on a rear of the outdoor unit 30, and the connector 400 may include an inlet connector 401 and an outlet connector 402. In addition, the intake pipe PI may be connected to one end of the inlet connector 401, and the outlet pipe PO may be connected to one or a first end of the outlet connector 402. Additionally, one or a first end of the pump inlet pipe 43 may be connected to the other or a second end of the inlet connector 401, and one or a first end of the deaeration discharge pipe 48 may be connected to the other or a second end of the outlet connector 402. The other or a second end of the pump inlet pipe 43 may be connected to a suction port of the pump 44, and the other or a second end of the deaeration discharge pipe 48 may be connected to a discharge port of the deaerator 46.

In addition, one or a first end of the pump discharge pipe 45 may be connected to a discharge port of the pump 44, and the other or a second end of the pump discharge pipe 45 may be connected to the heat storage tank 41. The deaeration inlet pipe 47 may connect the heat storage tank 41 and a suction port of the deaerator 46. For example, the deaeration inlet pipe 47 may be connected to an upper side of the heat storage tank 41, and the pump discharge pipe 45 may be connected to a lower side of the heat storage tank 41. The refrigerant and fluid may flow in opposite directions inside of the heat storage tank 41, thereby increasing an amount of heat exchange per unit time. That is, heat exchange efficiency may be improved.

With this configuration, when the high-temperature and high-pressure gaseous refrigerant flows into the heat storage tank 41 through the refrigerant inlet pipe 403 and flows downward and is discharged through the refrigerant discharge pipe 404, the fluid flowing into the inlet pipe PI may be introduced into the heat storage tank 41 through the pump inlet pipe 43, the pump 44, and the pump discharge pipe 45. In addition, the hot fluid heated by heat exchange with the refrigerant while flowing upward inside of the heat storage tank 41 may be supplied to the indoor space through the deaeration inlet pipe 47, the deaerator 46, the deaeration discharge pipe 48, and the outlet pipe (PO). The hot fluid, such as water, supplied to the indoors is used for hot fluid supply (hot water supply) or indoor floor heating.

In addition, the flow sensor 42 may be installed at one point of the pump discharge pipe 45, so that a flow rate of fluid flowing into the heat storage tank 41 may be measured. In addition, gas contained in the fluid passing through the heat storage tank 41 may be discharged to the outside from the deaerator 46, and only the degassed hot fluid may be supplied indoors through the deaeration discharge pipe 48 and the outlet pipe PO.

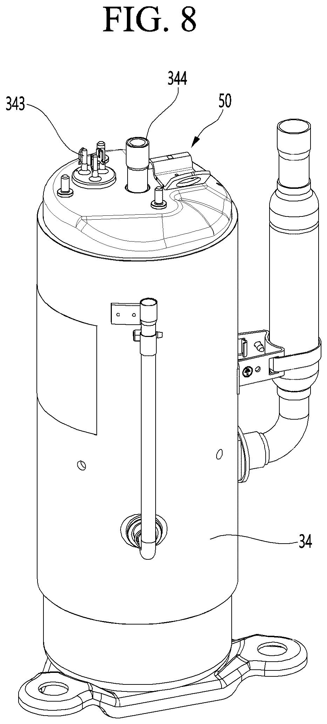

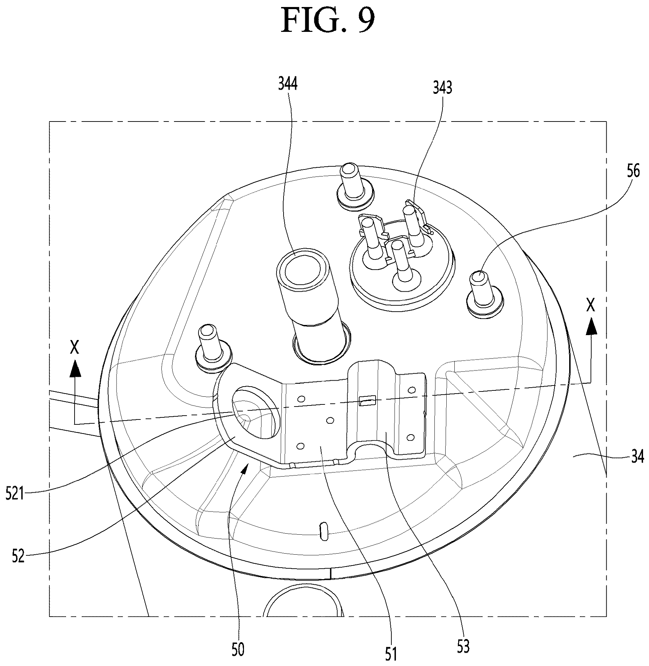

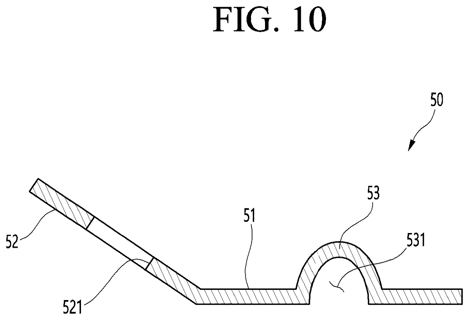

FIG. 8 is a perspective view of a compressor equipped with a fixing bracket according to an embodiment. FIG. 9 is an enlarged view of the compressor showing the fixing bracket mounted thereto. FIG. 10 is a cross-sectional view of the fixing bracket, taken along line X-X of FIG. 9. The compressor may be, but not limited thereto, same as described hereinabove with reference to any one of the FIGs 1 to 7.

Referring to Figs. 8 to 10, a discharge port 344 may protrude from a center of the upper surface of the compressor 34 according to an embodiment, and a power terminal 343 may be installed at a predetermined point which is away from the discharge port 344.

A plurality of screws 56 for fastening a terminal cover (not shown) may protrude from the upper surface of the compressor 34, and a fixing bracket 50 that mounts a temperature sensor may be installed at another predetermined point which is away from the discharge port 344. The fixing bracket 50 may be made of a metal material and may be fixed to the upper surface of the compressor 34 by, for example, by soldering or another type of fastening structure. According to the invention, the fixing portion is fixed to the surface of the compressor by welding or brazing. The fixing bracket 50 may be described as a metal piece in which a rectangular metal plate is bent multiple times. The fixing bracket 50 is formed in one-part e.g. a single rectangular metal plate is bent multiple times.

The fixing bracket 50 includes a fixing part or portion (linear or flat portion) 51 fixed to the upper surface of the compressor 34, a hanging part or portion (inclined portion) 52 bent (e.g. bent upward with respect to the upper surface of the compressor 34) at a predetermined angle at one or a first end of the fixing portion 51, and a sensor holder (rounded portion) 53 formed in such a manner that a portion of the fixing portion 51 is curved upwardly. In other words, the hanging portion 52 may be formed as a round or curved part flanked on one side or both sides by the fixing part or portion.

The hanging portion 52 is formed with a hanging hole 521 through which a hook of a hoist may be hooked. The sensor holder 53 may be formed to be round or curved in an arch shape to define or form a sensor hole 531 or sensor indentation or sensor recessed space for inserting a temperature sensor.

By inserting the temperature sensor into the sensor hole 531, a sensing portion of the temperature sensor may contact the upper surface of the compressor 34, thereby accurately detecting an outlet temperature of the compressor 34, i.e. accurately detecting a temperature of the upper surface of the compressor 34 at which the discharge port 344 of the compressor 34 is formed.

In addition, a hoist may be hung on the hanging hole 521 formed in the hanging portion 52 to transport the compressor 34. In this way, a hanging structure for transporting the compressor and a sensor holder structure for mounting the temperature sensor may be provided in the one fixing bracket 50, thereby not only reducing manufacturing costs but also allowing more accurate detection of the outlet temperature of the compressor 34.

Embodiments disclosed herein provide an outdoor unit of an air conditioner that may include a compressor having a power terminal and a discharge port that protrudes from an upper surface thereof, and a fixing bracket coupled at a point on the upper surface of the compressor that is spaced apart from the power terminal and the discharge port. The fixing bracket may be provided with a hanging hole to which a hoist may be hooked and a sensor holder on which a temperature sensor may be mounted.

The fixing bracket may be a metal piece that has a predetermined width and length, and is bent and rounded multiple times.

The fixing bracket may include a fixing part or portion fixed to the upper surface of the compressor; a hanging part or portion inclined upward by a predetermined angle at one end of the fixing portion; and a sensor holder in which a portion of the fixing part is convexly rounded in an arch shape. A sensor hole into which the temperature sensor may be inserted may be formed on a lower side of the sensor holder. The hanging hole may be formed in the hanging part.

According to embodiments disclosed herein, both the structure for mounting the temperature sensor and the hoist hanger structure are applied to a single fixing bracket, so there is an advantage in that the temperature sensor may be easily mounted. Additionally, there is an advantage in that the temperature sensor may accurately detect the temperature of the discharge port of the compressor by contacting the upper surface of the compressor.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

All references of the refrigerant flowing into the indoor unit 20 refer to the refrigerant flowing into the indoor heat exchanger 21 of the indoor unit 20. Similarly, all references of the refrigerant flowing into the outdoor unit 30 refer to the refrigerant flowing into the outdoor heat exchanger 32 of the outdoor unit 30.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments are described herein with reference to cross-section illustrations that are schematic illustrations of idealized embodiments (and intermediate structures). As such, variations from the shapes of the illustrations as a result, for example, of manufacturing techniques and/or tolerances, are to be expected. Thus, embodiments should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the invention defined by the appended claims.

## Claims

1. An outdoor unit of an air conditioner, comprising:
a compressor (34) having a surface and a discharge port (344) protruding from the surface of the compressor (34); and
a fixing bracket (50) coupled on the surface of the compressor (34), wherein the fixing bracket (50) is formed in one-part form and comprises:
- a fixing portion (51) fixed to the surface of the compressor (34) by welding or brazing,
- a hanging portion (52) extending from the fixing portion (51) and inclined upward with respect to the surface of the compressor (34), wherein hanging portion (52) includes a hanging hole (521) spaced apart from the surface of the compressor (34) and configured to receive a hoist to be hooked thereto, and
- a sensor holder (53) extending from the fixing portion (51) and defining a sensor space (531) facing the surface of the compressor (34) for receiving a temperature sensor therein to detect a temperature of the surface of the compressor (34).

2. The outdoor unit of claim 1, wherein the surface of the compressor is an upper surface of the compressor, and/or
wherein the outdoor unit comprising: the temperature sensor, wherein a sensing portion of the temperature sensor is in contact with the surface of the compressor (34).

3. The outdoor unit of claim 1 or 2, wherein the discharge port (344) protrudes from a center of the surface of the compressor (34); and/or
wherein the sensor holder (53) is spaced apart from the discharge port (344).

4. The outdoor unit of any one of the preceding claims,
wherein the compressor (34) further comprises a power terminal (343) formed on or protruding from the surface of the compressor (34); or
wherein the compressor (34) further comprises a power terminal (343) formed on or protruding from the surface of the compressor (34), and wherein the sensor holder (53) is spaced apart from the power terminal (343).

5. The outdoor unit of claim 4, wherein the discharge port (344) is disposed between the power terminal (343) and the fixing bracket (50), along the surface of the compressor (34).

6. The outdoor unit of any one of the preceding claims, wherein the sensor holder (53) has a convex shape or an arch shape, and wherein a surface of the sensor holder (53) defining the convex shape or the arch shape faces the surface of the compressor (34).

7. The outdoor unit of any one of the preceding claims, wherein the fixing portion (51) has a flat plate shape and/or wherein the hanging portion (52) has a flat plate shape.

8. The outdoor unit of any one of the preceding claims, wherein:
the fixing portion (51) is between the hanging portion (52) and the sensor holder (53); or
the hanging portion (52), the fixing portion (51) and the sensor holder (53) are linearly arranged, and the fixing portion (51) is between the hanging portion (52) and the sensor holder (53).

9. The outdoor unit of any one of the preceding claims, wherein:
portions of the fixing bracket (50) defining the hanging portion (52), the fixing portion (51) and the sensor holder (53) are linearly arranged; or
the fixing bracket (50) is formed of a single metal bracket bent to define the hanging portion (52), the fixing portion (51) and the sensor holder (53), and portions of the fixing bracket (50) defining the hanging portion (52), the fixing portion (51) and the sensor holder (53) are linearly arranged.

10. The outdoor unit of any one of the preceding claims, wherein the surface of the compressor is an upper surface of the compressor, wherein the fixing bracket (50) further includes:
an additional fixing portion coupled to the surface of the compressor (34), and wherein the sensor holder (53) is disposed between the fixing portion (51) and the additional fixing portion.

11. The outdoor unit of claim 10, wherein:
the additional fixing portion is coupled to the surface of the compressor (34) by one or more fastening members penetrating through the fixing portion (51) and coupled to the surface of the compressor, and/or wherein the additional fixing portion is fixed to the surface of the compressor by welding or brazing.

12. The outdoor unit of claim 10 or 11, wherein the additional fixing portion has a flat plate shape.

13. The outdoor unit of any one of claims 10 to 12, wherein the hanging portion (52), the fixing portion (51), the sensor holder (53) and the additional fixing portion are linearly arranged, and the fixing portion (51) is between the hanging portion (52) and the sensor holder (53).

14. The outdoor unit of any one of claims 10 to 13, wherein:
portions of the fixing bracket (50) defining the hanging portion (52), the fixing portion (51), the sensor holder (53) and the additional fixing portion are linearly arranged; or
the fixing bracket (50) is formed of a single metal bracket bent to define the hanging portion (52), the fixing portion (51), the sensor holder (53) and the additional fixing portion, and portions of the fixing bracket (50) defining the hanging portion (52), the fixing portion (51), the sensor holder (53) and the additional fixing portion are linearly arranged.

15. An air conditioner comprising an outdoor unit of any one of the preceding claims.

## Patentansprüche

1. Außeneinheit einer Klimaanlage, die Folgendes umfasst:
einen Kompressor (34), der eine Oberfläche und eine Auslassöffnung (344), die von der Oberfläche des Kompressors (34) vorsteht, aufweist; und
eine Fixierungshalterung (50), die an die Oberfläche des Kompressors (34) gekoppelt ist, wobei die Fixierungshalterung (50) in einer einteiligen Form gebildet ist und Folgendes umfasst:
- einen Fixierungsabschnitt (51), der durch Schweißen oder Hartlöten an der Oberfläche des Kompressors (34) fixiert ist,
- einen Aufhängungsabschnitt (52), der sich von dem Fixierungsabschnitt (51) erstreckt und bezüglich der Oberfläche des Kompressors (34) nach oben geneigt ist, wobei der Aufhängungsabschnitt (52) ein Aufhängungsloch (521) enthält, das von der Oberfläche des Kompressors (34) beabstandet ist und konfiguriert ist, eine Hebevorrichtung aufzunehmen, die darin eingehakt werden soll, und
- einen Sensorhalter (53), der sich von dem Fixierungsabschnitt (51) erstreckt und einen Sensorraum (531) definiert, der der Oberfläche des Kompressors (34) zugewandt ist, um einen Temperatursensor darin aufzunehmen, um eine Temperatur der Oberfläche des Kompressors (34) zu detektieren.

2. Außeneinheit nach Anspruch 1, wobei die Oberfläche des Kompressors eine obere Oberfläche des Kompressors ist und/oder
wobei die Außeneinheit Folgendes umfasst: den Temperatursensor, wobei sich ein Erfassungsabschnitt des Temperatursensors in Kontakt mit der Oberfläche des Kompressors (34) befindet.

3. Außeneinheit nach Anspruch 1 oder 2, wobei die Auslassöffnung (344) von einem Mittelpunkt der Oberfläche des Kompressors (34) vorsteht; und/oder
wobei der Sensorhalter (53) von der Auslassöffnung (344) beabstandet ist.

4. Außeneinheit nach einem der vorhergehenden Ansprüche,
wobei der Kompressor (34) ferner einen Leistungsanschluss (343) umfasst, der auf der Oberfläche des Kompressors (34) gebildet ist oder davon vorsteht; oder
wobei der Kompressor (34) ferner einen Leistungsanschluss (343) umfasst, der auf der Oberfläche des Kompressors (34) gebildet ist oder davon vorsteht, und wobei der Sensorhalter (53) von dem Leistungsanschluss (343) beabstandet ist.

5. Außeneinheit nach Anspruch 4, wobei die Auslassöffnung (344) entlang der Oberfläche des Kompressors (34) zwischen dem Leistungsanschluss (343) und der Fixierungshalterung (50) angeordnet ist.

6. Außeneinheit nach einem der vorhergehenden Ansprüche, wobei der Sensorhalter (53) eine konvexe Form oder eine Bogenform aufweist und wobei eine Oberfläche des Sensorhalters (53), die die konvexe Form oder die Bogenform definiert, der Oberfläche des Kompressors (34) zugewandt ist.

7. Außeneinheit nach einem der vorhergehenden Ansprüche, wobei der Fixierungsabschnitt (51) eine flache Plattenform aufweist und/oder wobei der Aufhängungsabschnitt (52) eine flache Plattenform aufweist.

8. Außeneinheit nach einem der vorhergehenden Ansprüche, wobei:
der Fixierungsabschnitt (51) sich zwischen dem Aufhängungsabschnitt (52) und dem Sensorhalter (53) befindet; oder
der Aufhängungsabschnitt (52), der Fixierungsabschnitt (51) und der Sensorhalter (53) geradlinig angeordnet sind und der Fixierungsabschnitt (51) sich zwischen dem Aufhängungsabschnitt (52) und dem Sensorhalter (53) befindet.

9. Außeneinheit nach einem der vorhergehenden Ansprüche, wobei:
Abschnitte der Fixierungshalterung (50), die den Aufhängungsabschnitt (52), den Fixierungsabschnitt (51) und den Sensorhalter (53) definieren, geradlinig angeordnet sind; oder
die Fixierungshalterung (50) aus einer einzelnen Metallhalterung gebildet ist, die gebogen ist, um den Aufhängungsabschnitt (52), den Fixierungsabschnitt (51) und den Sensorhalter (53) zu definieren, und Abschnitte der Fixierungshalterung (50), die den Aufhängungsabschnitt (52), den Fixierungsabschnitt (51) und den Sensorhalter (53) definieren, geradlinig angeordnet sind.

10. Außeneinheit nach einem der vorhergehenden Ansprüche, wobei die Oberfläche des Kompressors eine obere Oberfläche des Kompressors ist, wobei die Fixierungshalterung (50) ferner Folgendes enthält:
einen zusätzlichen Fixierungsabschnitt, der an die Oberfläche des Kompressors (34) gekoppelt ist, und wobei der Sensorhalter (53) zwischen dem Fixierungsabschnitt (51) und dem zusätzlichen Fixierungsabschnitt angeordnet ist.

11. Außeneinheit nach Anspruch 10, wobei:
der zusätzliche Fixierungsabschnitt durch ein oder mehrere Befestigungselemente, die den Fixierungsabschnitt (51) durchdringen und an die Oberfläche des Kompressors (34) gekoppelt sind, an die Oberfläche des Kompressors (34) gekoppelt ist und/oder wobei der zusätzliche Fixierungsabschnitt durch Schweißen oder Hartlöten an die Oberfläche des Kompressors fixiert ist.

12. Außeneinheit nach Anspruch 10 oder 11, wobei der zusätzliche Fixierungsabschnitt eine flache Plattenform aufweist.

13. Außeneinheit nach einem der Ansprüche 10 bis 12, wobei der Aufhängungsabschnitt (52), der Fixierungsabschnitt (51), der Sensorhalter (53) und der zusätzliche Fixierungsabschnitt geradlinig angeordnet sind und der Fixierungsabschnitt (51) sich zwischen dem Aufhängungsabschnitt (52) und dem Sensorhalter (53) befindet.

14. Außeneinheit nach einem der Ansprüche 10 bis 13, wobei:
Abschnitte der Fixierungshalterung (50), die den Aufhängungsabschnitt (52), den Fixierungsabschnitt (51), den Sensorhalter (53) und den zusätzlichen Fixierungsabschnitt definieren, geradlinig angeordnet sind; oder
die Fixierungshalterung (50) aus einer einzelnen Metallhalterung gebildet ist, die gebogen ist, um den Aufhängungsabschnitt (52), den Fixierungsabschnitt (51), den Sensorhalter (53) und den zusätzlichen Fixierungsabschnitt zu definieren, und Abschnitte der Fixierungshalterung (50), die den Aufhängungsabschnitt (52), den Fixierungsabschnitt (51), den Sensorhalter (53) und den zusätzlichen Fixierungsabschnitt definieren, geradlinig angeordnet sind.

15. Klimaanlage, die eine Außeneinheit nach einem der vorgehenden Ansprüche umfasst.

## Revendications

1. Unité extérieure d'un climatiseur, comportant :
un compresseur (34) ayant une surface et un orifice d'évacuation (344) faisant saillie à partir de la surface du compresseur (34) ; et
une patte de fixation (50) couplée à la surface du compresseur (34), dans laquelle la patte de fixation (50) est formée en une seule pièce et comporte :
- une partie de fixation (51) fixée à la surface du compresseur (34) par soudage ou brasage,
- une partie de suspension (52) s'étendant à partir de la partie de fixation (51) et inclinée vers le haut par rapport à la surface du compresseur (34), dans laquelle la partie de suspension (52) inclut un trou de suspension (521) espacé de la surface du compresseur (34) et configuré pour recevoir un palan à accrocher à celle-ci, et
- un support de capteur (53) s'étendant à partir de la partie de fixation (51) et définissant un espace de capteur (531) dirigé vers la surface du compresseur (34) pour recevoir un capteur de température dans celui-ci afin de détecter une température de la surface du compresseur (34).

2. Unité extérieure selon la revendication 1, dans laquelle la surface du compresseur est une surface supérieure du compresseur, et/ou
dans laquelle l'unité extérieure comporte le capteur de température, dans laquelle une partie de détection du capteur de température est en contact avec la surface du compresseur (34).

3. Unité extérieure selon la revendication 1 ou 2, dans laquelle l'orifice d'évacuation (344) fait saillie à partir d'un centre de la surface du compresseur (34) ; et/ou
dans laquelle le support de capteur (53) est espacé de l'orifice d'évacuation (344).

4. Unité extérieure selon l'une quelconque des revendications précédentes,
dans laquelle le compresseur (34) comporte en outre une borne d'alimentation (343) formée sur la surface du compresseur (34) ou faisant saillie à partir de celle-ci ; ou
dans laquelle le compresseur (34) comporte en outre une borne d'alimentation (343) formée sur la surface du compresseur (34) ou faisant saillie à partir de celle-ci, et dans laquelle le support de capteur (53) est espacé de la borne d'alimentation (343).

5. Unité extérieure selon la revendication 4, dans laquelle l'orifice d'évacuation (344) est disposé entre la borne d'alimentation (343) et la patte de fixation (50), le long de la surface du compresseur (34).

6. Unité extérieure selon l'une quelconque des revendications précédentes, dans laquelle le support de capteur (53) a une forme convexe ou une forme d'arc, et dans laquelle une surface du support de capteur (53) définissant la forme convexe ou la forme d'arc est dirigée vers la surface du compresseur (34).

7. Unité extérieure selon l'une quelconque des revendications précédentes, dans laquelle la partie de fixation (51) a une forme de plaque plate et/ou dans laquelle la partie de suspension (52) a une forme de plaque plate.

8. Unité extérieure selon l'une quelconque des revendications précédentes, dans laquelle :
la partie de fixation (51) est située entre la partie de suspension (52) et le support de capteur (53) ; ou
la partie de suspension (52), la partie de fixation (51) et le support de capteur (53) sont agencés linéairement, et la partie de fixation (51) est située entre la partie de suspension (52) et le support de capteur (53).

9. Unité extérieure selon l'une quelconque des revendications précédentes, dans laquelle :
des parties de la patte de fixation (50) définissant la partie de suspension (52), la partie de fixation (51) et le support de capteur (53) sont agencées linéairement ; ou
la patte de fixation (50) est formée d'une patte métallique coudée pour définir la partie de suspension (52), la partie de fixation (51) et le support de capteur (53), et des parties de la patte de fixation (50) définissant la partie de suspension (52), la partie de fixation (51) et le support de capteur (53) sont agencées linéairement.

10. Unité extérieure selon l'une quelconque des revendications précédentes, dans laquelle la surface du compresseur est une surface supérieure du compresseur, dans laquelle la patte de fixation (50) inclut en outre :
une partie de fixation supplémentaire couplée à la surface du compresseur (34), et dans laquelle le support de capteur (53) est disposé entre la partie de fixation (51) et la partie de fixation supplémentaire.

11. Unité extérieure selon la revendication 10, dans laquelle :
la partie de fixation supplémentaire est couplée à la surface du compresseur (34) par un ou plusieurs éléments de fixation pénétrant à travers la partie de fixation (51) et couplés à la surface du compresseur, et/ou dans laquelle la partie de fixation supplémentaire est fixée à la surface du compresseur par soudage ou brasage.

12. Unité extérieure selon la revendication 10 ou 11, dans laquelle la partie de fixation supplémentaire a une forme de plaque plate.

13. Unité extérieure selon l'une quelconque des revendications 10 à 12, dans laquelle la partie de suspension (52), la partie de fixation (51), le support de capteur (53) et la partie de fixation supplémentaire sont agencés linéairement, et la partie de fixation (51) est située entre la partie de suspension (52) et le support de capteur (53).

14. Unité extérieure selon l'une quelconque des revendications 10 à 13, dans laquelle :
des parties de la patte de fixation (50) définissant la partie de suspension (52), la partie de fixation (51), le support de capteur (53) et la partie de fixation supplémentaire sont agencées linéairement ; ou
la patte de fixation (50) est formée d'une seule patte métallique coudée pour définir la partie de suspension (52), la partie de fixation (51), le support de capteur (53) et la partie de fixation supplémentaire, et des parties de la patte de fixation (50) définissant la partie de suspension (52), la partie de fixation (51), le support de capteur (53) et la partie de fixation supplémentaire sont agencées linéairement.

15. Climatiseur comportant une unité extérieure selon l'une quelconque des revendications précédentes.
